# EUROPEAN PATENT SPECIFICATION

(11) **EP 2 618 525 B1**
(45) Date of publication and mention of the grant of the patent: **27.07.2016**
(21) Application number: 11824919.2
(22) Date of filing: 09.08.2011
(51) Int. Cl.: H04L 12/40, H04L 12/403, H04L 12/751, H04L 12/841, H04L 12/875, H04L 12/46, H04L 12/66, H04L 29/08, H04L 29/06, H04J 3/06, B60R 16/023

(54) **IN-VEHICLE DATA RELAY DEVICE AND VEHICLE CONTROL SYSTEM**
FAHRZEUGINTERNE RELAISVORRICHTUNG UND FAHRZEUGSTEUERUNGSSYSTEM
DISPOSITIF FORMANT RELAIS DE DONNÉES EMBARQUÉ À BORD D'UN VÉHICULE ET SYSTÈME DE COMMANDE DE VÉHICULE

(30) Priority: 16.09.2010 JP 2010208140
(43) Date of publication of application: 24.07.2013
(73) Proprietor: Hitachi Automotive Systems, Ltd., Hitachinaka-shi Ibaraki 312-8503 (JP)
(72) Inventor: ISHIGOOKA Tasuku, Hitachi-shi Ibaraki 319-1292 (JP); NARISAWA Fumio, Hitachi-shi Ibaraki 319-1292 (JP); MIYAKE Junji, Hitachinaka-shi Ibaraki 312-8503 (JP)
(74) Representative: MERH-IP Matias Erny Reichl Hoffmann Patentanwälte PartG mbB
(86) International application number: PCT/JP2011/068130
(87) International publication number: WO 2012/035911

(56) References cited:
- WO-A1-2010/052892
- WO-A1-2010/079538
- JP-A- 9 187 065
- JP-A- 2008 306 648
- JP-A- 2009 194 449
- MAKOTO YOSHIDA ET AL.: 'A Study on Integrated Digital Loop Carrier System' IEICE TECHNICAL REPORT, SSE91-150 TO 166, [KOKAN SYSTEM] vol. 91, no. 499, 05 March 1992, pages 97 - 102, XP008170333

## Description

### TECHNICAL FIELD

The present invention relates to a technology for relaying data in an automotive network.

### BACKGROUND ART

Many of the modem automotive systems include an ECU (Electronic Control Unit) for operating electronic automotive control devices, and an onboard LAN (Local Area Network) for enabling communicates between a plurality of ECUs. As an example of the onboard LAN, a CAN (Controller Area Network) is widely used.

With the increasingly more sophisticated functionality of the vehicles and automotive systems, the traffic of data in in-vehicle networks has increased, and the lack of communication band for CAN has become apparent. Thus, in recent years, FlexRay (registered trademark) is increasingly being adopted because of its large communication capacity compared with CAN. FlexRay has approximately ten times higher transmission rate than CAN and therefore can communicate large amounts of data. To address the demand for higher reliability of automotive control systems, automotive control systems have been developed by utilizing the characteristics of FlexRay so that highly reliable communications can be performed.

Generally, an automotive control system is a system for controlling a vehicle by a plurality of ECUs communicating and coordinating with one another via an in-vehicle network. The in-vehicle network may include a plurality of types of networks, such as CAN, which is an event-triggered network that transmits data sporadically, and FlexRay, which is a time-triggered network that transmits data periodically.

In order for the ECUs to communicate with one another via such various types of networks, an automotive data relay apparatus ("gateway ECU") is required for relaying communication data between the networks while accommodating differences in communication protocol and the like of the networks.

The structure of an automotive control system may vary depending on the type of vehicle, product delivery destination, selection of functionality made at the time of purchase of the vehicle by the user, and the like. Thus, in the automotive control system, the data relay information configuration or network configuration in the gateway need to be individually adjusted. For example, when the type of car is changed, the networks of the system and the arrangement of the ECUs connected to the networks may vary and therefore the data communication paths between the ECUs may be changed even when the ECUs used are the same. Further, even during product development, the arrangement of the ECUs and the communication paths between the ECUs may be changed when the product development target is changed. Thus, the in-vehicle gateway needs to adjust the communication path information accordingly.

Further, as the control data are varied due to a change in car type or the switching of travel mode, the traffic of communications generated in the networks varies, so that the time-triggered network needs to be modified accordingly.

The gateway also needs to transmit communication data received from a network to other networks other than the receiving network for transmission and reception of data that are referenced in a control operating process for controlling the system. Because the communication data are used for automotive control, the gateway needs to satisfy the time constraint (real-time property) of the data communication.

In order to change the data relay information or network configuration, it is necessary to modify and re-compile a program for the gateway. This requires a number of man-hours for the modification and recompile of the program, and a number of man-hours for verification of the configuration, resulting in much burden.

Further, in the method involving a recompile, the configuration of the time-triggered network cannot be changed in accordance with communication traffic when the traffic is varied during the operation of the automotive control system.

Thus, a need is felt for changing the routing data or a slot amount for the automotive gateway without modifying the program for the gateway even when the routing data to be configured in the gateway or the slot amount for the time-triggered network is changed.

Patent Literature 1 proposes a method of changing data relay information without changing the program for the gateway. According to this document, the gateway inquires an ECU about the presence or absence of data to be relayed. When the ECU has the data to be relayed by the gateway, the ECU returns a message including the data and a data identifier. The in-vehicle gateway newly registers or updates the correspondence between the data identifier and its relay destination as data relay information.

Patent Literature 2 describes a method such that an ECU requests the gateway to newly register or update data relay information.

Meanwhile, in a TCP/IP network, a node transmits a message by designating the destination IP address for the data to be transmitted, and a router that has received the message relays the message in accordance with the destination IP of the message.

WO 2010/079538 A1 relates to a data transmission device that transmits data having a low priority while not obstructing transmission of data having a higher priority as much as possible. For that matter a data transmission device is provided including a monitoring unit for monitoring a transmission time period of data and predicting a transmission timing with which the above-mentioned data will be transmitted next time from the transmission time period. The data transmission device delays the transmission timing of data in the data transmission device when the transmission timing of the data in the data transmission device is close to transmission timing predicted by the monitoring unit, whereas commands a network I/F unit to transmit the data in the data transmission device when the transmission timing of the data in the data transmission device is not close to the predicted transmission timing.

WO 2010/052892 A1 relates to a communication system for effectively performing a communication timing adjustment when a collision has occurred on a communication line. For that matter an instruction transmitting unit transmits a.performance instruction message, from the connecting unit, which instructs to perform the transmission timing adjustment when a determining unit has determined that the transmission timing adjustment should be performed.

### CITATION LIST

### PATENT LITERATURE

Patent Literature 1: Japanese Patent Publication (Kokai) No. 2006-319540 A
Patent Literature 2: Japanese Patent Publication (Kokai) No. 2005-341495 A

### SUMMARY OF INVENTION

### TECHNICAL PROBLEM

In a time-triggered network, the slot number that the automotive gateway can use is stipulated in advance. For example, when data received from CAN is relayed to FlexRay, in order to put high priority data in the slot used by the automotive gateway, preprocessing needs to be completed before the time of the slot, as described below.

The automotive gateway relays high priority data first so as to satisfy the real-time property of data relay. In FlexRay, which is a time division communication protocol, data are transmitted on a slot unit basis. Thus, when the automotive gateway relays data received from CAN to FlexRay, the high priority data among the data received from CAN needs to be put in the slot that the automotive gateway can use before the transmission time for the slot. Thus, preprocessing for selecting the high priority data, for example, needs to be completed before the transmission time for the slot that the automotive gateway can use.

In the technology according to Patent Literature 1, when the data received from CAN is transmitted to FlexRay as the time-triggered network, as the traffic increases, it may not be possible to ensure completion of the various processes mentioned above before the transmission time for the slot that the automotive gateway can use. As a result, the automotive gateway may not be able to satisfy the time constraint of data communication.

Satisfying the time constraint without fail involves an operation for rewriting and reinstalling the control program for the automotive gateway such that the various processes can be completed before the transmission time for the slot that the automotive gateway can use. As this operation is required for each of in-vehicle networks with different traffics, operational burden may become excessive.

The above problem associated with Patent Literature 1 also exists in the technology according to Patent Literature 2.

The problem of Patent Literatures 1 and 2 is also encountered in the routing technology used in TCP/IP networks because the TCP/IP network is an event-triggered network and therefore not provided with means for solving the problem.

While the above discussion is concerned with the case involving an increase in traffic, the same problem needs to be considered in the case involving a decrease in traffic so that optimum communication performance can be maintained.

The present invention was made in view of the above problem, and an object of the present invention is to provide a technology such that communication performance required for relaying communication data can be appropriately maintained in an in-vehicle network including a time-triggered network even when the traffic to be relayed by a gateway is increased or decreased.

### SOLUTION TO PROBLEM

An in-vehicle gateway according to the present invention dynamically changes a slot amount or a slot ID for the time-triggered network that is used by the in-vehicle gateway in accordance with the traffic to be relayed, and determines the execution timing for the process corresponding to a slot in accordance with the changed slot amount or slot ID.

### ADVANTAGEOUS EFFECTS OF INVENTION

The in-vehicle gateway according to the present invention can dynamically select an appropriate slot amount or slot ID even when traffic to be relayed by the gateway is increased or decreased. Because when the slot amount or the slot ID is changed, the execution timing for the process corresponding to the slot is also changed, the execution timing of the process is changed in accordance with the changed slot amount or slot ID. In this way, relaying of data can be continued without problems before and after the change.

### BRIEF DESCRIPTION OF DRAWINGS

FIG. 1 illustrates a network structure of an automotive control system 100 according to the first embodiment.
FIG. 2 is a functional block diagram of a gateway 1.
FIG. 3 illustrates a structure of a network configuration information table 1221 and data examples.
FIG. 4 illustrates a structure of a routing table 1222 and data examples.
FIG. 5 illustrates a structure of a transmission slot ID managing table 1223 and data examples.
FIG. 6 illustrates a structure of a reception slot ID managing table 1224 and a data example.
FIG. 7 illustrates a structure of an activation timing table 1225 and data examples.
FIG. 8 illustrates other data examples for the activation timing table 1225.
FIG. 9 illustrates an operation flow of a process of detection of traffic by a network configuration changing unit 1211.
FIG. 10 illustrates the calculation of traffic by the network configuration changing unit 1211 on the basis of data size in step S1211_000.
FIG. 11 illustrates an operation flow of a process of changing a network configuration by the network configuration changing unit 1211.
FIG. 12 illustrates an operation flow of a process of relaying communication data between networks by a data relay processing unit 1213.
FIG. 13 illustrates an operation flow of a process of reception of communication data by a reception processing unit 1215.
FIG. 14 illustrates an operation flow of a process of reception of communication data from a CAN network by the reception processing unit 1215.
FIG. 15 illustrates an operation flow of a process of reception of communication data from a FlexRay network by the reception processing unit 1215.
FIG. 16 illustrates an operation flow of a process of transmission of communication data to the CAN network by a transmission processing unit 1214.
FIG. 17 illustrates an operation flow of a process of transmission of communication data to the FlexRay network by the transmission processing unit 1214.
FIG. 18 illustrates an operation flow of a process of adjusting the timing of execution of the process allocated to each slot by a process timing determination unit 1212.
FIG. 19 illustrates an operation flow of a process of starting up the process allocated to each slot by the process timing determination unit 1212.
FIG. 20 is a functional block diagram of the gateway 1 according to the second embodiment.
FIG. 21 illustrates a structure of network configuration updating data 161 stored in an external memory 16 and data examples.
FIG. 22 illustrates a structure of routing data 162 stored in the external memory 16 and data examples.
FIG. 23 illustrates an operation flow of an apparatus initialization unit 1216.
FIG. 24 illustrates an operation flow of a process of initializing the data relay processing unit 1213.

### DESCRIPTION OF EMBODIMENTS

### <First embodiment>

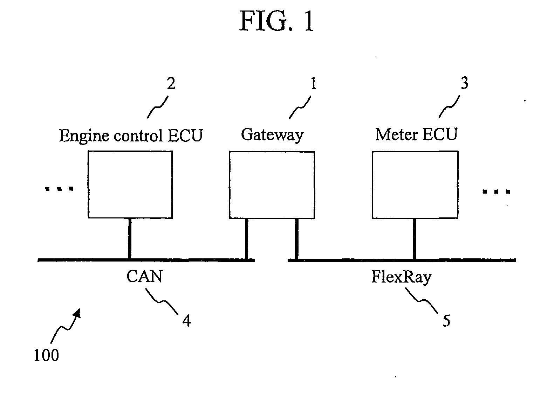

FIG. 1 illustrates a network structure of an automotive control system 100 according to the first embodiment of the present invention. The automotive control system 100 is structured such that one or more ECUs (electronic control units) for controlling a vehicle are connected by a network. In the illustrated example, an engine control ECU 2 is connected to a CAN network 4, a meter ECU 3 is connected to a FlexRay network 5, and the CAN network 4 and the FlexRay network 5 are relayed by a gateway 1. The network structure and the structure of the control units are not limited to the illustrated example.

The ECUs control various parts of the vehicle and communicate among the ECUs as needed. For example, the engine control ECU 2 transmits vehicle speed data to the CAN network 4, and the gateway 1 receives the vehicle speed data. When the routing data is configured such that the gateway 1 relays the vehicle speed data to the FlexRay network 5, the gateway 1 transmits the vehicle speed data to the FlexRay network 5 in accordance with the description of the routing data. The meter ECU 3 receives the vehicle speed data from the FlexRay network 5 and displays the data on a meter.

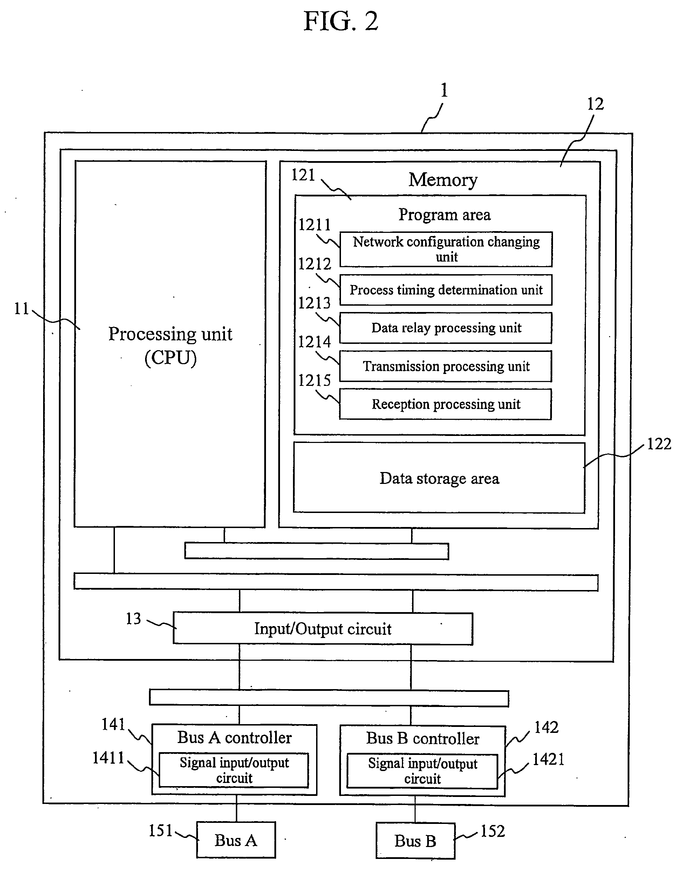

FIG. 2 is a functional block diagram of the gateway 1. The gateway 1 is an apparatus for relaying communication data between the networks. The gateway 1 is provided with a processing unit 11 (CPU: Central Processing Unit); a memory 12; an input/output circuit 13; a bus A controller 141; and a bus B controller 142. The bus A controller 141 is connected to a bus A151, and the bus B controller 142 is connected to a bus B152.

The memory 12 includes a program area 121 and a data storage area 122. The program area 121 stores a network configuration changing unit 1211; a process timing determination unit 1212; a data relay processing unit 1213; a transmission processing unit 1214; and a reception processing unit 1215. These various functional units may be implemented as software programs. Equivalent functions may be implemented by hardware, such as circuit devices.

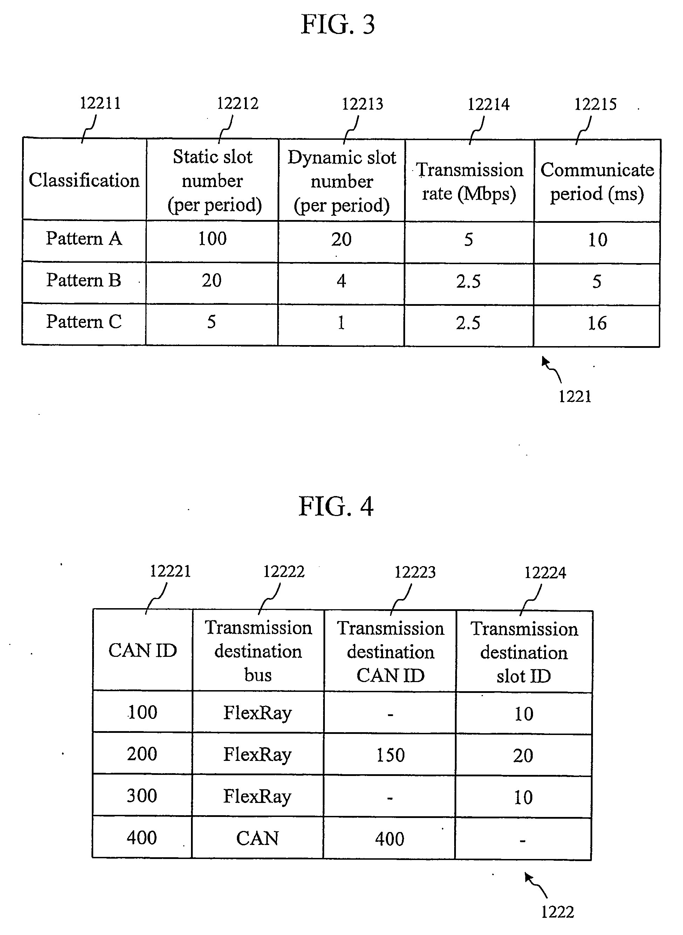

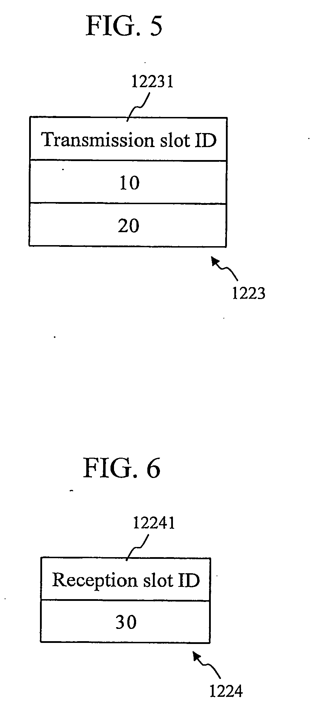

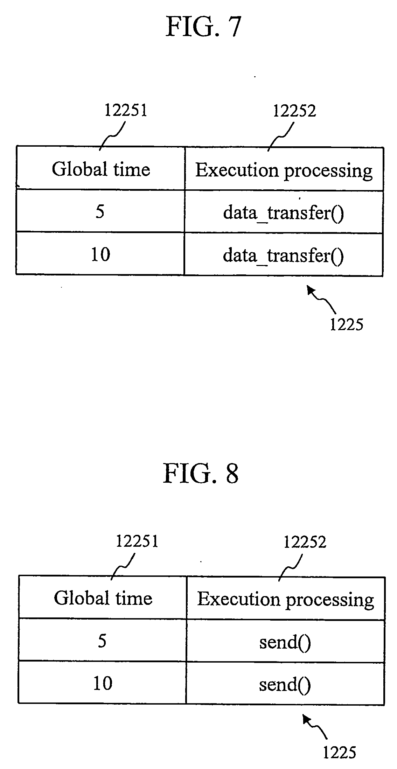

The data storage area 122 stores a network configuration information table 1221 which will be described later with reference to FIG. 3; a routing table 1222 as will be described with reference to FIG. 4; a transmission slot ID managing table 1223 as will be described with reference to FIG. 5; a reception slot ID managing table 1224 as will be described with reference to FIG. 6; and an activation timing table 1225 as will be described with reference to FIGs. 7 and 8.

The bus A controller 141 includes a signal input/output circuit 1411. The bus B controller 142 includes a signal input/output circuit 1421. The signal input/output circuits perform necessary processes as needed, such as digitally converting a communication signal received from the corresponding bus. According to the first embodiment, the bus A151 is connected to the CAN network 4, while the bus B 152 is connected to the FlexRay network 5.

FIG. 3 illustrates a structure of the network configuration information table 1221 and data examples. The network configuration information table 1221 is a table for storing a plurality of patterns of communication parameters for the FlexRay network 5. The network configuration information table 1221 includes a classification field 12211; a static slot number field 12212; a dynamic slot number field 12213; a transmission rate field 12214; and a communication period field 12215.

The classification field 12211 stores the name for identifying a communication parameter pattern for the FlexRay network 5. The static slot number field 12212 stores the number of static slots for the FlexRay network 5. The dynamic slot number field 12213 stores the number of dynamic slots for the FlexRay network 5. The transmission rate field 12214 stores the transmission rate for the FlexRay network 5. The communication period field 12215 stores the communication cycle for the FlexRay network 5.

The network configuration changing unit 1211 selects one of the communication parameter patterns stored in the network configuration information table 1221 depending on the traffic, and applies the selected communication parameters to the gateway 1 and other communication apparatuses, as will be described in detail later.

FIG. 4 illustrates a structure of the routing table 1222 and data examples. The routing table 1222 is a table describing routes for the gateway 1 to relay communication data between the networks. The routing table 1222 includes a CAN ID (identification) field 12221; a destination bus field 12222; a destination CAN ID field 12223; and a destination slot ID field 12224.

The CAN ID field 12221 stores the data type used in the CAN network 4, i.e., the CAN ID. The gateway 1 performs conversions between the destination network, the slot ID after relaying and the like by using this field for each type of data used on the CAN network 4.

The destination bus field 12222 describes information identifying the destination network to which the communication data received from the source network is to be relayed. In the illustrated example, the relay destination is identified by the bus name.

The destination CAN ID field 12223 stores the CAN ID used in the destination network. For example, in the case of the data example in the second row, when the gateway 1 receives communication data with CAN ID = 200, the data is transmitted to the destination network (FlexRay network 5) after the CAN ID is converted to 150.

The destination slot ID field 12224 stores the slot ID used in the destination network. For example, in the case of the data example in the first row, when the gateway 1 receives communication data with CAN ID = 100, the data is transmitted to the destination network (FlexRay network 5) after the communication data is allocated to the slot with slot ID = 10.

When the data type is distinguished by the CAN ID in the destination network, the CAN ID needs to be used in some form in the destination network as well. In this case, the CAN ID in the destination network is described in the routing table 1222, as indicated by the data example in the second row. When the data type can be identified by a value other than the CAN ID, such as the slot ID, alone, only the slot ID in the destination network may be designated, as indicated by the data examples in the first and the third rows. When the data type can be identified by using a value other than those, the other value may be used. For example, the data type ID is described within the data payload portion so that the data type can be distinguished by the value of the data type ID.

While the above description regarding FIG. 4 is based on the assumption that the communication data is relayed from the CAN network 4 to the FlexRay network 5, routing data similar to those of FIG. 4 may be provided for other routes.

FIG. 5 illustrates a structure of the transmission slot ID managing table 1223 and data examples. The transmission slot ID managing table 1223 is a table that stores a list of slot IDs that can be used when the gateway 1 relays data to the FlexRay network 5.

The transmission slot ID managing table 1223 includes a transmission slot ID field 12231 for storing the slot IDs that can be used when the gateway 1 transmits data to the FlexRay network 5.

FIG. 6 illustrates a structure of the reception slot ID managing table 1224 and data examples. The reception slot ID managing table 1224 is a table for storing a list of slot IDs that can be used when the gateway 1 relays data from the FlexRay network 5 to the other network.

The reception slot ID managing table 1224 includes a reception slot ID field 12241 for storing the slot ID that can be used when the gateway 1 receives data from the FlexRay network 5.

FIG. 7 illustrates a structure of the activation timing table 1225 and data examples. The activation timing table 1225 is a table describing the timing of execution of a process allocated to each slot for the time-triggered network (the FlexRay network 5 in the illustrated example). Specifically, the correspondence between a global time synchronized among the ECUs and the name of the process to be executed at the time is described. The activation timing table 1225 includes a global time field 12251 and an executed process field 12252.

The global time field 12251 stores, of the common time (global time) synchronized among the ECUs connected to the time-triggered network (the FlexRay network 5), the time at which the process allocated to each slot in advance is to be executed. The executed process field 12252 describes the process to be executed at the time by the gateway 1. While the process name is described by the name of a function to be executed in the illustrated example, the mode of description may be arbitrarily determined.

FIG. 8 illustrates other data examples for the activation timing table 1225. While the example of FIG. 7 pertains to the execution of a data relay process (data_transfer()), the example of FIG. 8 pertains to the execution of a transmission process (send()).

The tables illustrated in FIGs. 3 to 8 may be stored in a storage apparatus, such as an HDD (Hard Disk Drive) of the gateway 1, in advance, and read onto the memory 12 as needed. Alternatively, data corresponding to the tables may be received from another communication apparatus and used, or similar data stored in an external storage medium for the gateway 1 may be read and used.

The structure of the gateway 1 has been described. In the following, a process flow in which the gateway 1 changes the slot amount in accordance with the traffic to be relayed and adjusts the timing of execution of each process will be described.

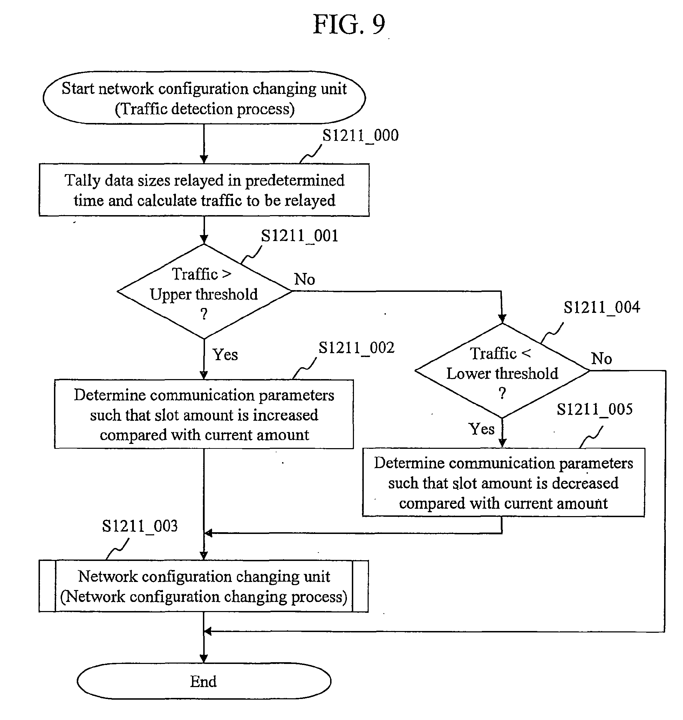

FIG. 9 illustrates an operation flow of a process in which the network configuration changing unit 1211 detects traffic. Each step of FIG. 9 will be described.

### (FIG. 9: Step S1211_000)

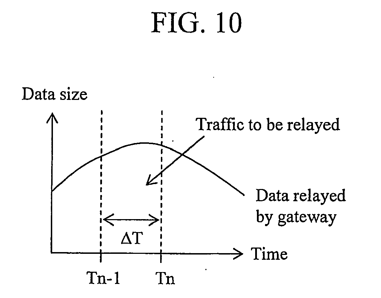

The network configuration changing unit 1211 tallies the sizes of data relayed in a certain time, and calculates the traffic that the gateway 1 is relaying at that point in time (i.e., the traffic to be relayed by the gateway 1). The concept of calculation will be described later with reference to FIG. 10. While in the first embodiment it is assumed that the gateway 1 regards the sum of the sizes of data relayed within a predetermined time as the traffic, this is for the sake of description and the present invention is not limited to such an embodiment. For example, the sum of the number of data being relayed by the gateway 1 may be regarded as the traffic.

### (FIG. 9: Step S1211_000: Additional note)

The number of data relayed by the gateway 1 may be measured by counting the number of appearance of the CAN ID of communication data. For example, when 10 communication data with CAN ID = 100 and 20 communication data with CAN ID = 200 are relayed, the number of data relayed by the gateway 1 is 30.

### (FIG. 9: Step S1211_001)

The network configuration changing unit 1211 determines whether the traffic currently being relayed by the gateway 1 exceeds a predetermined upper threshold. When the upper threshold is exceeded, the process goes on to step S1211_002; when the upper threshold is not exceeded, the process proceeds to step S1211_004.

### (FIG. 9: Step S1211_002)

The network configuration changing unit 1211 determines the communication parameters such that the slot amount for the time-triggered network (the FlexRay network 5 in the present example) is increased compared with the current slot amount. For example, when the current configuration of the FlexRay network 5 is for the classification pattern B described in the network configuration information table 1211, it is decided that the pattern B be changed to pattern A.

### (FIG. 9: Step S1211_002: Additional note 1)

In this step, the slot amount for the FlexRay network 5 is increased so that the slot amount that the gateway 1 can use can be increased. In this way, the slot amount allocated to the gateway 1 can be appropriately ensured even when the traffic is increased, so that the margin for allocation of a high priority process to the available slot can be increased. Further, the preprocessing preceding the slot allocation can be performed with that much greater margin, so that the constraint regarding relay speed can be satisfied.

### (FIG. 9: Step S1211_002: Additional note 2)

As a method for increasing the slot amount for the FlexRay network 5, the transmission rate may be increased, the communication period may be decreased (frequency is increased), or the time per slot may be decreased; any of these methods may be used. In FIG. 3, the first two methods are explicitly suggested by way of example. These values may be configured as the communication parameters for a communication controller for the gateway 1. The transmission processing unit 1214 and the reception processing unit 1215 transmit or receive communication data by using such values.

### (FIG. 9: Step S1211_002: Additional note 3)

According to the first embodiment, the slot amount for the time-triggered network (the FlexRay network 5) as a whole is increased so that the slot amount that the gateway 1 can use can be increased. However, this is merely an example, and the increase in traffic may be handled by increasing the allocation of slot amount that the gateway 1 can use among the slots for the FlexRay network 5. Alternatively, the increase in traffic may be handled by providing a process time margin by changing the slot ID such that the activation timing is shifted.

### (FIG. 9: Step S1211_003)

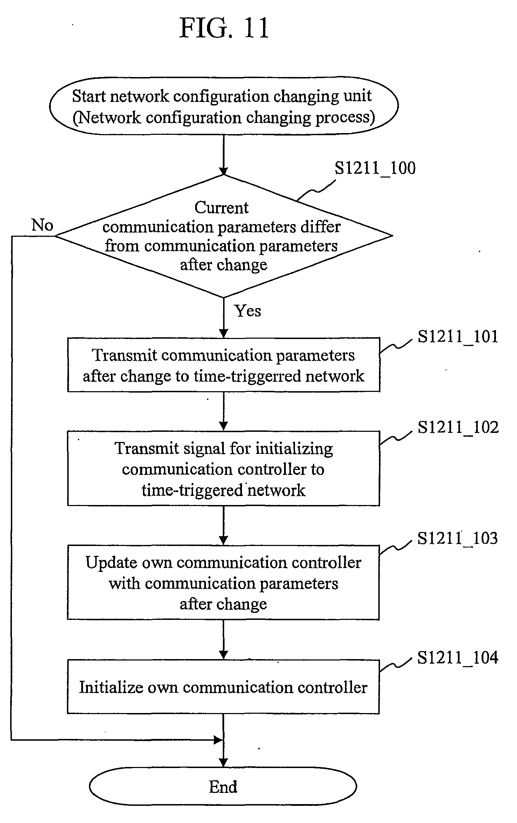

The network configuration changing unit 1211 executes a network configuration changing process as will be described later with reference to FIG. 11, and applies the changed network configuration.

### (FIG. 9: Step S1211 _004)

The network configuration changing unit 1211 determines whether the traffic currently being relayed by the gateway 1 is less than a predetermined lower threshold. When the traffic is lower than the lower threshold, the process proceeds to step S1211_005. When the traffic is not lower than the lower threshold, the present operation flow ends.

### (FIG. 9: Step S1211_005)

The network configuration changing unit 1211 determines the communication parameters such that the slot amount for the time-triggered network (the FlexRay network 5 in the present example) becomes smaller than the current volume. For example, when the current configuration of the FlexRay network 5 is for the classification pattern B described in the network configuration information table 1211, it is decided that the pattern be changed to pattern C.

### (FIG. 9: Step S1211_005: Additional note)

In this step, as in step S1211_002, a decrease in traffic may be handled by decreasing the allocation of slot amount that the gateway 1 can use.

FIG. 10 illustrates how the network configuration changing unit 1211 calculates the traffic on the basis of data size in step S1211_000. The network configuration changing unit 1211 tallies the sum of data sizes relayed by the gateway 1 between a reference time Tₙ and a time Tₙ₋₁, for example, and regards the sum as the traffic.

While an example of the operation of the network configuration changing unit 1211 for calculating traffic has been described, an external apparatus may calculate the traffic of the in-vehicle network and notify the gateway 1 via communication data describing the calculated value. Similarly, the traffic may be identified by reading the value from an external storage medium describing the traffic of the in-vehicle network.

FIG. 11 illustrates the operation flow of a process in which the network configuration changing unit 1211 changes network configuration. In the following, each step of FIG. 11 will be described.

### (FIG. 11: Step 1211_100)

The network configuration changing unit 1211 determines whether the current communication parameters for the FlexRay network 5 and the communication parameters after the change are different. When the communication parameters are different, the process proceeds to step S1211_101. When the communication parameters are the same, the present operation flow ends.

### (FIG. 11: Step S1211_101)

The network configuration changing unit 1211 transmits communication data to another communication apparatus connected to the time-triggered network (the FlexRay network 5) with the instruction that the changed communication parameters be applied. Each of the ECUs connected to the FlexRay network 5 changes the communication parameters in accordance with the instruction by the communication data.

### (FIG. 11: Step S1211_101: Additional note)

The network configuration changing unit 1211 may not necessarily issue the instruction regarding the changed communication parameters to each ECU individually. For example, when all of the other ECUs are connected to the FlexRay network 5, the FlexRay network 5 may be notified of the changed communication parameters. In this case, the notification reaches each ECU automatically.

### (FIG. 11: Step S1211_102)

The network configuration changing unit 1211 transmits communication data to the other communication apparatus connected to the time-triggered network (the FlexRay network 5) with an instruction that the communication controller be initialized. Upon reception of the instruction, each of the ECUs connected to the FlexRay network 5 updates the communication parameters for the communication controller in accordance with the instruction received in step S1211_100.

### (FIG. 11: Step S1211_103)

The network configuration changing unit 1211 updates the communication parameters for the communication controller for the gateway 1 in accordance with the communication parameters determined in step S1211_002 or S1211_005.

### (FIG. 11: Step S1211_104)

The network configuration changing unit 1211 initializes the communication controller for the gateway 1.

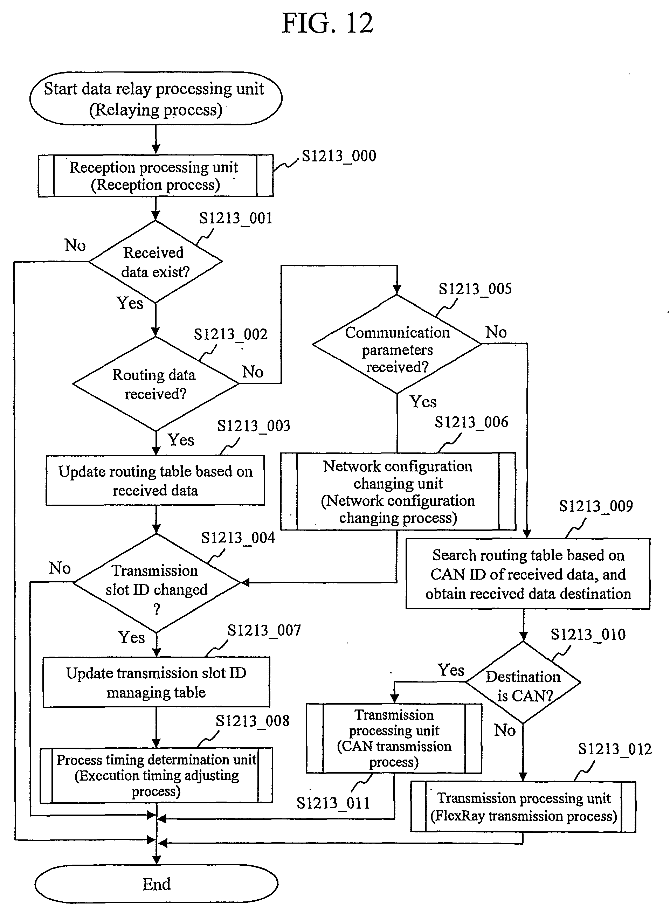

FIG. 12 illustrates an operation flow of a process in which the data relay processing unit 1213 relays communication data between the networks. In the following, each step of FIG. 12 will be described.

### (FIG. 12: Step S1213_000)

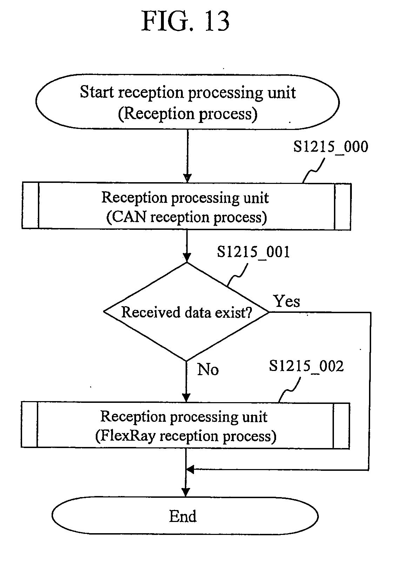

The data relay processing unit 1213 calls a reception process for the reception processing unit 1215 which will be described later with reference to FIG. 13, and acquires data received from a network.

### (FIG. 12: Step S1213_001)

The data relay processing unit 1213 determines whether there is data that the reception processing unit 1215 has received from the network. When there is the received data, the process proceeds to step S1213_002. When there is no received data, the present operation flow ends.

### (FIG. 12: Step S1213_002)

The data relay processing unit 1213 determines whether the data received in step S1213_000 is routing data. The routing data refers to data that indicates the changed content of the routing table 1222. When the received data is the routing data, the process proceeds to step S1213_003. When the received data is not the routing data, the process goes on to step S1213_005.

### (FIG. 12: Step S1213_002: Additional note 1)

This step is based on the assumption that the instruction for updating the routing table 1222 may be received from another communication apparatus via the in-vehicle network.

### (FIG. 12: Step S1213_002: Additional note 2)

In order to determine whether the received data is the routing table, the CAN ID of the received data may be referenced. For example, when it is defined in the automotive control system 100 that the communication data with CAN ID = 700 is routing data, the received data is determined to be routing data or not depending on whether the CAN ID of the received data is 700.

### (FIG. 12: Step S1213_003)

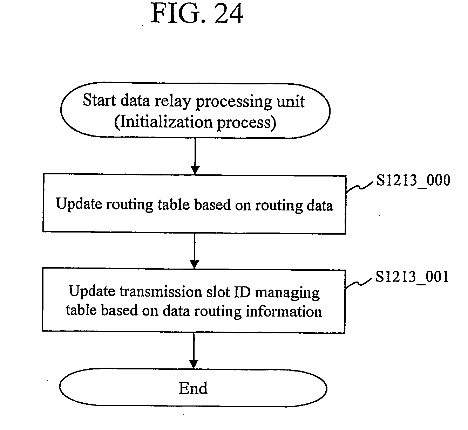

The data relay processing unit 1213 updates the routing table 1222 on the basis of the routing data received in step S1213_000. For example, when the routing data describes the CAN ID of the data to be relayed, a destination bus, a destination CAN ID, and a destination slot ID, the data relay processing unit 1213 updates the CAN ID field 12221, the destination bus field 12222, the destination CAN ID field 12223, and the destination slot ID field 12224 of the routing table 1222 in accordance with the corresponding data values. A procedure described with reference to FIG. 24 may also be used.

### (FIG. 12: Step S1213_003: Additional note)

While the main purpose of this step is to update the communication data route, the slot ID at the relay destination may also be changed. In this case, because the slot ID is changed, it may become necessary to also update the transmission slot ID managing table 1223 or the reception slot ID managing table 1224, or further the timing of execution of the process allocated to each slot.

### (FIG. 12: Step S1213_004)

The data relay processing unit 1213 determines whether the total number of transmission slot IDs or the value of a slot ID has been changed. For example, it is determined whether the total number of the transmission slot IDs or the value of a slot ID has been changed from the time of previous reference by referring to the transmission slot ID managing table 1223. When there is a change, the process goes to step S1213_007. When there is no change, the present operation flow ends.

### (FIG. 12: Step S1213_005)

The data relay processing unit 1213 determines whether the data received in step S1213_000 is communication data with the instruction to change the communication parameters for a network. When the data includes the instruction for changing the communication parameters, the process proceeds to step S1213_006. When the data does not include the instruction for changing the communication parameters, the process proceeds to step S1213_009.

### (FIG. 12: Step S1213_005: Additional note)

In order to determine whether the received data includes the instruction for changing the communication parameters, the CAN ID of the received data may be referenced, as in step S1213_002.

### (FIG. 12: Step S1213_006)

The network configuration changing unit 1211 executes the network configuration changing process described with reference to FIG. 11, and applies the changed network configuration.

### (FIG. 12: Step S1213_007)

The data relay processing unit 1213 updates the transmission slot ID managing table 1223. When the total number of the transmission slot IDs is increased, the new transmission slot ID is added to the transmission slot ID managing table 1223. When the total number of the transmission slot IDs is decreased, the relevant transmission slot ID is deleted from the transmission slot ID managing table 1223.

### (FIG. 12: Step S1213_008)

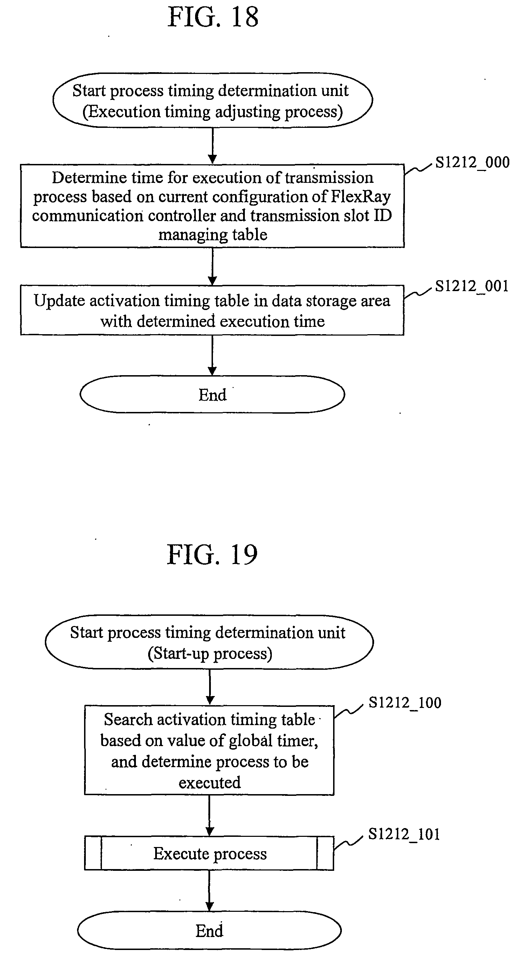

The data relay processing unit 1213 calls an execution timing adjusting process for the process timing determination unit 1212 which will be described later with reference to FIG. 18, and adjusts the timing of execution of the process allocated to each slot in accordance with the transmission slot ID managing table 1223.

### (FIG. 12: Step S1213_009)

The data relay processing unit 1213 searches the routing table 1222 by using the CAN ID of the data received in step S1213_000 as a key, and identifies the relay destination to which the received data is to be relayed. For example, when the CAN ID of the received data is 200, the destination CAN ID field 12223 = 150 and the destination slot ID field 12224 = 20 are obtained. When the CAN ID of the received data is 100, the destination CAN ID field 12223 = none and the destination slot ID field 12224 = 10 are obtained.

### (FIG. 12: Step S1213_010)

The data relay processing unit 1213 determines whether the destination for the received data is the CAN network on the basis of the acquired relay destination. When the destination is the CAN network, the process proceeds to step S1213_011. When the destination is not the CAN network, the process proceeds to step S1213_012.

### (FIG. 12: Step S1213_011)

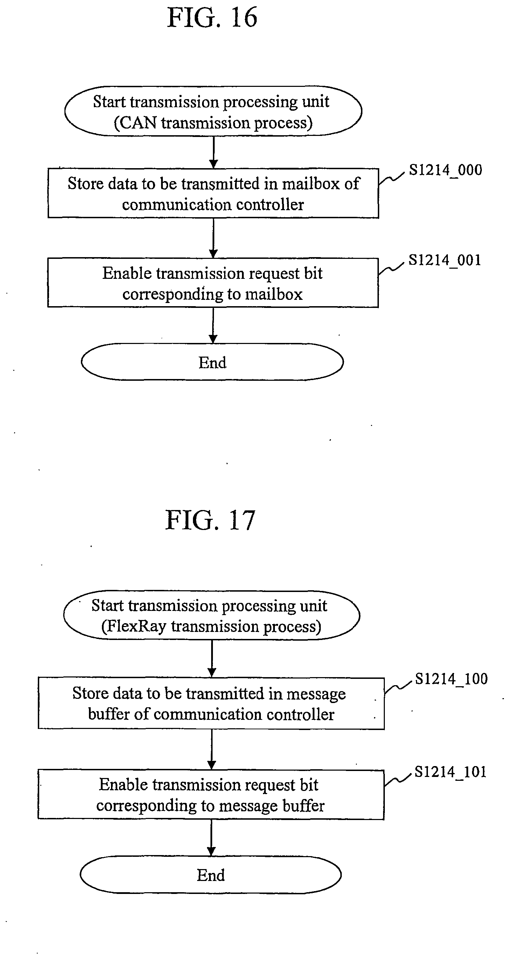

The data relay processing unit 1213 calls a CAN transmission process for the transmission processing unit 1214 which will be described later with reference to FIG. 16. At this time, the CAN ID and the value of the data to be transmitted are delivered as parameters, and the data value is transmitted by using the CAN ID.

### (FIG. 12: Step S1213_012)

The data relay processing unit 1213 calls a FlexRay transmission process for the transmission processing unit 1214 which will be described later with reference to FIG. 17. At this time, the CAN ID, the destination slot ID, and the value of the data to be transmitted are delivered as arguments, and data including the data value to which the CAN ID is attached is transmitted by using the slot ID.

FIG. 13 illustrates an operation flow of a process in which the reception processing unit 1215 receives communication data. In the following, each step of FIG. 13 will be described.

### (FIG. 13: Step S1215_000)

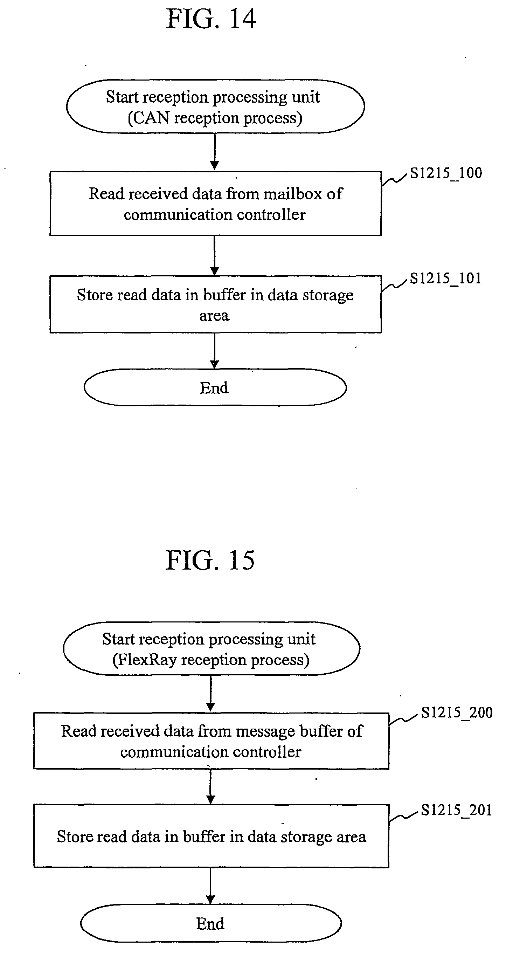

The reception processing unit 1215 calls a CAN reception process for the reception processing unit 1215 which will be described later with reference to FIG. 14, and receives data from the CAN network.

### (FIG. 13: Step S1215_001)

The reception processing unit 1215 determines whether the data received from the CAN network exists in a predetermined buffer. When the received data exists, the present operation flow ends. When the received data does not exist, the process proceeds to step S1215_002.

### (FIG. 13: Step S1215_001: Additional note)

In FIG. 13, on the assumption that communication data is relayed from the CAN network to the FlexRay network, reception of data from the CAN network is processed with priority in step S1215_001. When there is the data received from the CAN network in step S1215_001, the data is taken out of the buffer and relayed or otherwise processed, leaving the buffer empty. Thus, when the present operation flow is implemented the next time, the decision in step S1215_001 is "No", whereupon the FlexRay reception process is executed.

### (FIG. 13: Step S1215_002)

The reception processing unit 1215 calls a FlexRay reception process for the reception processing unit 1215 which will be described later with reference to FIG. 15, and receives data from the FlexRay network.

FIG. 14 illustrates an operation flow of a process in which the reception processing unit 1215 receives communication data from the CAN network. In the following, each step of FIG. 14 will be described.

### (FIG. 14: Step S1215_100)

The reception processing unit 1215 identifies the mailbox that has received the data from the CAN network from among the mailboxes of the communication controller, and reads the received data from the mailbox.

### (FIG. 14: Step S1215_101)

The reception processing unit 1215 stores the data read from the mailbox in a buffer in the data storage area 122. The storage destination address and the like for the data may be determined in advance, or the data storage destination may be designated by the calling source of the present operation flow.

FIG. 15 illustrates an operation flow of a process in which the reception processing unit 1215 receives communication data from the FlexRay network. In the following, each step of FIG. 15 will be described.

### (FIG. 15: Step S1215_200)

The reception processing unit 1215 identifies the message buffer that has received data from FlexRay from among the message buffers of the communication controller, and reads the received data from the message buffer.

### (FIG. 15: Step S1215_201)

The reception processing unit 1215 stores the data read from the message buffer in a buffer in the data storage area 122. The storage destination address and the like for the data may be determined in advance, or the data storage destination may be designated by the calling source of the present operation flow.

FIG. 16 illustrates an operation flow of a process in which the transmission processing unit 1214 transmits communication data to the CAN network. The present operation flow is called in step S1212_101 as will be described later with reference to FIG. 19. In the following, each step of FIG. 16 will be described.

### (FIG. 16: Step S1214_000)

The transmission processing unit 1214 stores data to be transmitted in a mailbox in the communication controller. The transmission processing unit 1214 identifies the storage destination mailbox on the basis of the CAN ID received as an argument.

### (FIG. 16: Step S1214_001)

The transmission processing unit 1214 enables a transmission request bit corresponding to the mailbox in which the data to be transmitted has been stored. The communication controller transmits the data in the mailbox for which the transmission request bit is enabled to the CAN network. Thus, the data stored in the mailbox in step S1214_000 is transmitted to the CAN network.

FIG. 17 illustrates an operation flow of a process in which the transmission processing unit 1214 transmits communication data to the FlexRay network. The present operation flow is called in step S1212_101 as will be described later with reference to FIG. 19. In the following, each step of FIG. 17 will be described.

### (FIG. 17: Step S1214_100)

The transmission processing unit 1214 stores data to be transmitted in a message buffer of the communication controller. The transmission processing unit 1214 identifies the storage destination message buffer on the basis of the slot ID received as an argument.

### (FIG. 17: Step S1214_101)

The transmission processing unit 1214 enables a transmission request bit corresponding to the message buffer in which the data to be transmitted has been stored. The communication controller transmits the data in the message buffer for which the transmission request bit is enabled to the FlexRay network. Thus, the data stored in step S1214_100 is transmitted to FlexRay.

FIG. 18 illustrates an operation flow of a process in which the process timing determination unit 1212 adjusts the timing of execution of the process allocated to each slot. In the following, each step of FIG. 18 will be described.

### (FIG. 18: Step S1212_000)

The process timing determination unit 1212 determines the time for execution of the process allocated to each corresponding slot, on the basis of the current configuration of the FlexRay communication controller and the content of the transmission slot ID managing table 1223. When the configuration information for the FlexRay communication controller, i.e., the static slot number, the dynamic slot number, the transmission rate, and the communication period, is known, the time for each slot can be calculated. Thus, when the slot ID corresponding to the process to be executed by the gateway 1 is known in addition to the above, the time for executing the process may be aligned with the time for the slot.

### (FIG. 18: Step S1212_000: Process example)

The process timing determination unit 1212 determines the activation timing such that the preprocessing necessary for transmitting communication data can be completed before the slot time for executing transmission. For example, the process timing determination unit 1212 determines the activation timing such that the preprocessing necessary for transmitting communication data is executed at a global time 200 µs prior to the slot time for executing transmission.

### (FIG. 18: Step S1212_000: Additional note 1)

The process timing determination unit 1212 may receive data with an instruction regarding the correspondence between the global time corresponding to each slot and the process to be executed at the time from another communication apparatus and implement the present step in accordance with the instruction. Alternatively, the process timing determination unit 1212 may read similar instruction data from an external storage medium and implement the present step in accordance with the data.

### (FIG. 18: Step S1212_000: Additional note 2)

The process timing determination unit 1212 needs to make adjustments as needed when determining the execution timing for each process such that the determined execution timing does not overlap with the execution timing for another process. The overlapping may be avoided by tallying the slot IDs of the communication data relayed by the data relay processing unit 1213 and storing the slot IDs in the memory 12, for example, so that the slot IDs that have been used can be avoided.

### (FIG. 18: Step S1212_001)

The process timing determination unit 1212 updates the activation timing table 1225 with the activation timing determined in step S1212_000. For example, when the determined activation timing is the global time "15", the process timing determination unit 1212 updates the activation timing table 1225 with the global time field 12251 = 15, and the executed process field 12252 = data_transfer() (relay process function executed by the data relay processing unit).

FIG. 19 illustrates an operation flow of a process in which the process timing determination unit 1212 starts up the process allocated to each slot. The present operation flow corresponds to a principal process of the gateway 1, and the processes of FIGs. 12, 13 to 15, 16, and 17, for example, are started up from the present operation flow as the starting point. The present operation flow is started by a global timer interrupt at predetermined time intervals, for example. In the following, each step of FIG. 19 will be described.

### (FIG. 19: Step S1212_100)

The process timing determination unit 1212 searches the activation timing table 1225 for a record whose value in the global time field 12251 matches the value of the current global timer. The purpose of this step is to determine the process to be executed at the current time.

### (FIG. 19: Step S1212_101)

The process timing determination unit 1212 executes the process determined in step S1212_100. For example, when the current global time is "5", the process timing determination unit 1212 executes the data relay process: data_transfer() in accordance with the description of the record with the global time field 12251 = 5 in the activation timing table 1225. When a plurality of processes needs to be executed at the current time, all of the processes are executed.

### <First embodiment: Summary>

As described above, the gateway 1 according to the first embodiment increases the slot amount for the FlexRay network 5 when the traffic to be relayed exceeds an upper threshold, and decreases the slot amount for the FlexRay network 5 when the traffic to be relayed is less than a lower threshold. Thus, in the automotive control system 100 in which the traffic may vary due to changes in the content of automotive control during the operation of the vehicle, for example, optimum communication performance can be provided in accordance with the variation in traffic. Further, even when the traffic differs depending on the type of vehicle, the need for adjusting the communication parameters for the FlexRay network 5 for each type of vehicle is eliminated, so that developmental burden can be decreased.

Further, in the gateway 1 according to the first embodiment, even when the position of the slot to which a certain process is allocated is changed by a change in the slot amount or the slot ID, the activation timing is re-adjusted in accordance with the slot time after the change. Thus, the need for adjusting the activation timing for each type of vehicle can be eliminated even when the slot time differs depending on the type of vehicle, so that developmental burden can be decreased. Further, preprocessing is started prior to the timing of execution of a high priority process such that the preprocessing can be completed in time for the corresponding slot time.

The gateway 1 according to the first embodiment can receive the communication parameters for the FlexRay network 5 from a network and change the communication parameters (network configuration information table 1221) for the FlexRay network 5 in accordance with the received communication parameters. Thus, the need for adjusting the communication parameters individually can be eliminated even when the transmission rate and the like of the FlexRay network differ depending on the type of vehicle, so that developmental burden can be decreased.

In the gateway 1 according to the first embodiment, the routing table 1222 can be updated by receiving routing data from a network. Thus, even when the route or the data to be relayed differs depending on the type of vehicle, the need for individually adjusting the content of the routing table 1222 can be eliminated, and the routing table 1222 can be updated as needed at an arbitrary point in time during the operation of the automotive control system 100.

### <Second embodiment>

According to a second embodiment of the present invention, a method is described such that the communication parameters or routing data for the FlexRay network 5 are acquired from an external storage medium, and the slot amount, the activation timing, the route and the like for the FlexRay network 5 are updated on the basis of the acquired information.

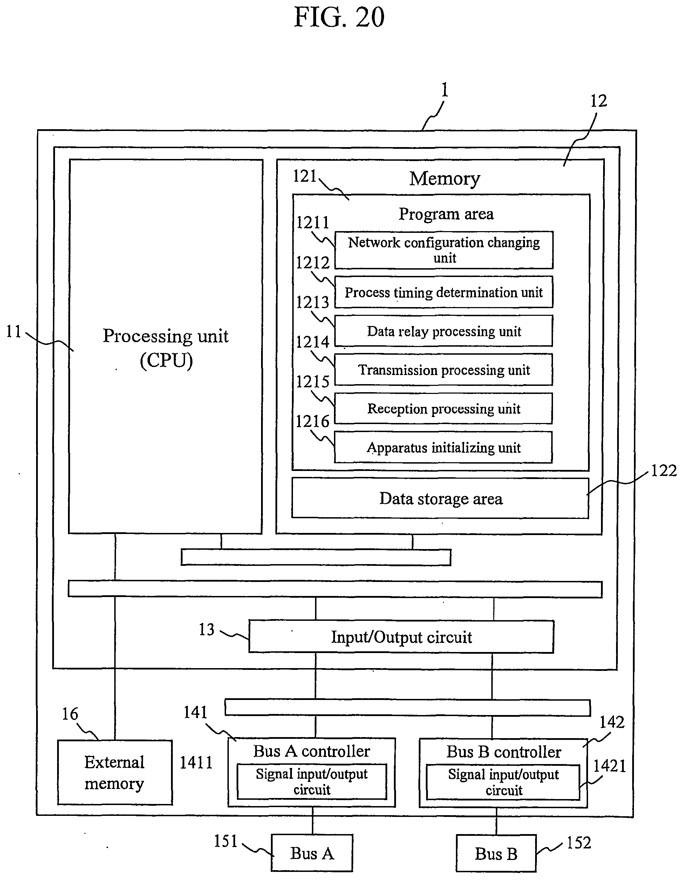

FIG. 20 is a functional block diagram of the gateway 1 according to the second embodiment. The gateway 1 according to the second embodiment is provided with an apparatus initialization unit 1216 and an external memory 16, in addition to the structure described with reference to the first embodiment. The apparatus initialization unit 1216 may be implemented in the form of a software program stored in the program area 121 of the memory 12.

The external memory 16 is a storage medium for storing data for updating the network configuration information table 1221, the routing table 1222 and the like of the gateway 1. Data for updating other configuration data may also be stored. The external memory 16 may be provided in the form of an external memory unit such as a flash ROM, or a storage medium such as a CD or a DVD.

According to the second embodiment, the external memory 16 stores the network configuration updating data 161 and the routing data 162 by way of example. However, the external memory 16 may store other update instructing data.

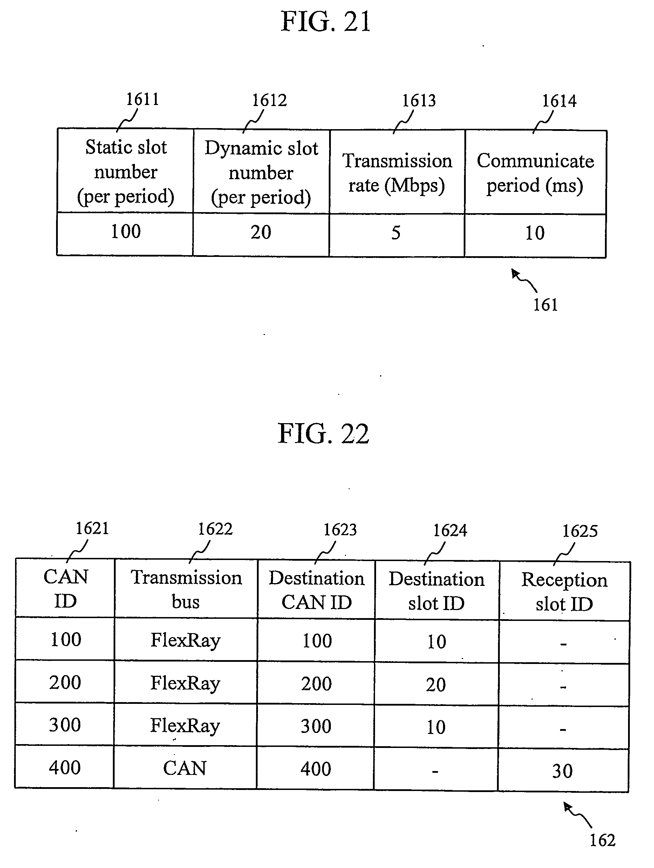

FIG. 21 illustrates a structure of the network configuration updating data 161 stored in the external memory 16 and data examples. The network configuration updating data 161 describes the communication parameters used by the communication controller for a time-triggered network (the FlexRay network 5 in the present example). The apparatus initialization unit 1216 changes the communication parameters for the communication controller to the described values, as will be described in detail later. A functional equivalent to the apparatus initialization unit 1216 may be implemented by hardware, such as a circuit device.

The network configuration updating data 161 includes a static slot number field 1611, a dynamic slot number field 1612, a transmission rate field 1613, and a communication period field 1614. The contents of these fields are similar to those of the network configuration information table 1221. These values determine the slot amount for the time-triggered network (the FlexRay network 5), so that the slot amount that the gateway 1 can use is also determined as a result.

FIG. 22 illustrates a structure of the routing data 162 stored in the external memory 16 and data examples. The routing data 162 are data describing the content of the routing table 1222 after updating. The routing data 162 includes a CAN ID field 1621, a destination bus field 1622, a destination CAN ID field 1623, a destination slot ID field 1624, and a reception slot ID 1625.

In addition to the content described with reference to FIG. 4, the routing data 162 newly includes the reception slot ID1625 so that a relay rule for reception of communication data from the FlexRay network 5 can be described. The contents of the other fields are similar to those of the routing table 1222.

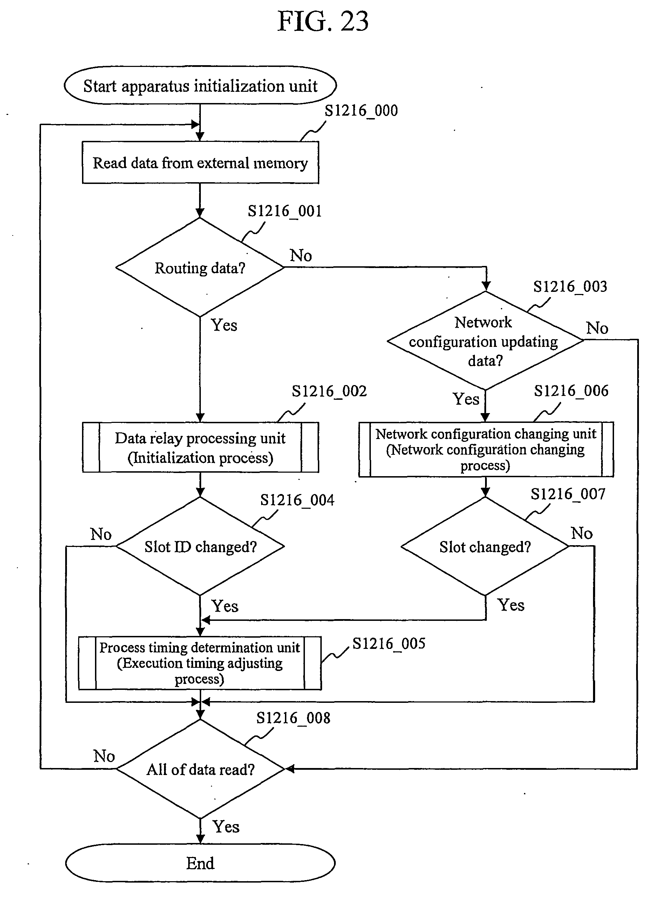

FIG. 23 illustrates an operation flow of the apparatus initialization unit 1216. The present operation flow is implemented when the gateway 1 is started up. In the following, each step of FIG. 23 will be described.

### (FIG. 23: Step S1216_000)

The apparatus initialization unit 1216 reads data stored in the external memory 16.

### (FIG. 23: Step S1216_001)

The apparatus initialization unit 1216 determines whether the data read in step S1216_000 is the routing data 162. When the data is the routing data 162, the process proceeds to step S1216_002. When the data is not the routing data 162, the process proceeds to step S1216_003.

### (FIG. 23: Step S1216_002)

The apparatus initialization unit 1216 calls an initialization process for the data relay processing unit 1213 which will be described later with reference to FIG. 24. At this time, the routing data 162 read in step S1216_000 is used as an argument.

### (FIG. 23: Step S1216_003)

The apparatus initialization unit 1216 determines whether the data read in step S1216_000 is the network configuration updating data 161. When the data is the network configuration updating data 161, the process proceeds to step S1216_006. When the data is not the network configuration updating data 161, the process proceeds to step S1216_008.

### (FIG. 23: Step S1216_004)

The apparatus initialization unit 1216 determines whether the total number of the transmission slot IDs or the value of a slot ID is changed. For example, the apparatus initialization unit 1216 refers to the transmission slot ID managing table 1223 and determines whether the total number of the transmission slot IDs or the value of a slot ID is changed from the time of previous reference. When there is a change, the process proceeds to step S1216_005. When there is no change, the process proceeds to step S1216_008.

### (FIG. 23: Step S1216_005)

The apparatus initialization unit 1216 calls the execution timing adjusting process for the process timing determination unit 1212 that has been described with reference to FIG. 18, and adjusts the process timing in accordance with the transmission slot ID after the change.

### (FIG. 23: Step S1216_006)

The apparatus initialization unit 1216 calls the network configuration changing process for the network configuration changing unit 1213 that has been described with reference to FIG. 11. At this time, the network configuration updating data 161 read in step S1216_003 is used as an argument.

### (FIG. 23: Step S1216_007)

The apparatus initialization unit 1216 determines whether the slot amount for the FlexRay communication controller is changed. For example, the apparatus initialization unit 1216 determines whether the slot amount is changed by comparing the slot amount for the FlexRay communication controller prior to a change and the current slot amount for the FlexRay communication controller. When the slot amount or a slot ID is changed, the process proceeds to step S1216-005. When the slot amount is not changed, the process proceeds to step S1216_008.

### (FIG. 23: Step S1216_008)

The apparatus initialization unit 1216 determines whether all of the data have been read from the external memory 16. When all of the data have been read, the present operation flow ends. When not all of the data have been read, the process returns to step S1216_000 and the same process is repeated. For example, when the data that has been read has a value indicating the last data, it is determined that all of the data have been read. Alternatively, it may be determined whether all of the data have been read on the basis of the address on the external memory 16 that is accessed when data is read.

FIG. 24 illustrates an operation flow of the initialization process of the data relay processing unit 1213. In the following, each step of FIG. 24 will be described.

### (FIG. 24: Step S1213_000)

The data relay processing unit 1213 updates the routing table 1222 on the basis of the routing data 162. For example, when the routing data 162 includes the CAN ID, the destination bus, the destination CAN ID, and the destination slot ID, the data relay processing unit 1213 updates the CAN ID field 12221, the destination bus field 12222, the destination CAN ID field 12223, and the destination slot ID field 12224 of the routing table 1222 with the corresponding data values.

### (FIG. 24: Step S1213_001)

The data relay processing unit 1213 updates the transmission slot ID managing table 1223 on the basis of the routing data 162. For example, when the number of the transmission slot IDs is increased, the new transmission slot ID is added to the transmission slot ID managing table 1223. When the number of the transmission slot IDs is decreased, the relevant transmission slot ID is deleted from the transmission slot ID managing table 1223.

### <Second embodiment: Summary>

As described above, the gateway 1 according to the second embodiment reads the routing data 162 and the network configuration updating data 161 from the external storage medium (external memory 16), and changes the routing table 1222, the slot amount for FlexRay, and the timing of execution of the transmission process in accordance with the data. In this way, even when the traffic to be relayed differs depending on the type of vehicle, the need for individually adjusting the routing table 1222 or the communication parameters for the FlexRay network 5 can be eliminated, so that developmental burden can be decreased. Further, in the automotive control system 100 in which the traffic may vary due to a change in the content of automotive control during the operation of the vehicle, for example, optimum communication performance can be provided in accordance with the variation in traffic.

The structures and operation flows described with reference to the first and the second embodiments are merely examples for the purpose of illustration or description of the present invention, and the structure or method of implementation of the gateway 1 is not limited to such examples. According to a further aspect of the invention, an in-vehicle gateway can be provided, wherein:
the network configuration changing unit increases the slot amount or changes the slot ID when the traffic to be relayed by the in-vehicle gateway is more than a predetermined traffic upper threshold; and
the network configuration changing unit does not increase the slot amount nor change the slot ID when the traffic to be relayed by the in-vehicle gateway is not more than the traffic upper threshold.

Further, an in-vehicle gateway can be provided, wherein:
the network configuration changing unit decreases the slot amount or change the slot ID when the traffic to be relayed by the in-vehicle gateway is less than a predetermined traffic lower threshold; and
the network configuration changing unit does not decrease the slot amount nor change the slot ID when the traffic to be relayed by the in-vehicle gateway is not less than the traffic lower threshold.

Further, an in-vehicle gateway can be provided, wherein the network configuration changing unit identifies the traffic to be relayed by the in-vehicle gateway by observing the communication data received by the reception unit from the in-vehicle network at predetermined periods.

Further, an in-vehicle gateway can be provided, wherein:
the reception unit receives the communication data describing the traffic of the in-vehicle network; and
the network configuration changing unit identifies the traffic to be relayed by the in-vehicle gateway on the basis of the traffic described by the communication data.

Further, an in-vehicle gateway can be provided, wherein the network configuration changing unit reads data describing the traffic of the in-vehicle network from an external storage medium for the in-vehicle gateway, and identifies the traffic to be relayed by the in-vehicle gateway on the basis of the data.

Further, an in-vehicle gateway can be provided, wherein:
the network configuration changing unit reads, from an external storage medium for the in-vehicle gateway, data describing the slot amount used by the in-vehicle gateway for the time-triggered network or data describing the slot ID used by the in-vehicle gateway for the time-triggered network; and
the network configuration changing unit changes the slot amount or the slot ID on the basis of the data.

Further, an in-vehicle gateway can be provided, wherein the network configuration changing unit initializes a communication controller for the transmission unit and the reception unit after changing the slot amount for the time-triggered network.

Further, an in-vehicle gateway can be provided, wherein the network configuration changing unit transmits initialization instruction data with an instruction for initializing a communication function to another communication apparatus connected to the time-triggered network before changing the slot amount for the time-triggered network.

Further, an in-vehicle gateway can be provided, wherein:
the reception unit receives the communication data describing the timing of execution of the process allocated to the slot for the time-triggered network; and
the transmission process timing determination unit synchronizes the timing of execution of the process allocated to the slot for the time-triggered network with the slot on the basis of the timing described in the communication data.

Further, an in-vehicle gateway is provided, wherein:
the transmission process timing determination unit reads, from an external storage medium for the in-vehicle gateway, data describing the timing of execution of the process allocated to the slot for the time-triggered network; and
the transmission process timing determination unit synchronizes the timing of execution of the process allocated to the slot for the time-triggered network with the slot on the basis of the data.

Further, an in-vehicle gateway is provided, wherein:
t he transmission process timing determination unit stores a value of the slot ID by tallying the communication data relayed by the in-vehicle gateway; and
t he transmission process timing determination unit readjusts the slot ID for the time-triggered network when there is an overlap with the changed slot ID.

Further, an in-vehicle gateway is provided, wherein:
the reception unit receives routing data describing a path for relaying the communication data received from the time-triggered network; and
the relay processing unit determines the path for relaying the communication data received from the time-triggered network in accordance with the description in the routing data.

Further, an in-vehicle gateway is provided, wherein:
the data relay destination determination unit reads, from an external storage medium for the in-vehicle gateway, routing data describing a path for relaying the communication data received from the time-triggered network; and
the data relay destination determination unit determines the path for relaying the communication data received from the time-triggered network in accordance with the data.

Further, an in-vehicle gateway is provided, wherein the network configuration changing unit regards a total size of data to be relayed by the in-vehicle gateway as the traffic to be relayed by the in-vehicle gateway.

Further, an in-vehicle gateway is provided, wherein the network configuration changing unit regards a total number of data to be relayed by the in-vehicle gateway in a predetermined time as the traffic to be relayed by the in-vehicle gateway.

Further, an in-vehicle gateway is provided, wherein the network configuration changing unit regards a total size of data to be relayed by the in-vehicle gateway as the traffic to be relayed by the in-vehicle gateway.

Further, an in-vehicle gateway is provided, wherein the network configuration changing unit regards a total number of data to be relayed by the in-vehicle gateway in a predetermined time as the traffic to be relayed by the in-vehicle gateway.

Further, an in-vehicle gateway is provided, wherein:
the reception unit receives routing data describing a path for relaying the communication data received from the time-triggered network and a value of the slot ID in a destination network; and
the transmission process timing determination unit synchronizes the timing of execution of the process allocated to the slot for the time-triggered network with the slot on the basis of the slot ID described in the routing data and the slot amount for the time-triggered network.

Further, an in-vehicle gateway is provided, further comprising an apparatus initialization unit that updates a configuration of the in-vehicle gateway,
wherein:
the apparatus initialization unit reads, from an external storage medium for the in-vehicle gateway, data describing the slot amount used by the in-vehicle gateway for the time-triggered network or the slot ID used by the in-vehicle gateway for the time-triggered network, data describing the timing of execution of the process allocated to the slot for the time-triggered network, and routing data describing a path for relaying the communication data received from the time-triggered network; and
the apparatus initialization unit, on the basis of the data, changes the slot amount or the slot ID, synchronizes the timing of execution of the process allocated to the slot for the time-triggered network with the slot, and determines the path for relaying the communication data received from the time-triggered network.

Further, an automotive control system is provided, comprising:
an in-vehicle gateway for relaying communication data in an in-vehicle network including a time-triggered network, the in-vehicle gateway comprising:
   a transmission unit that transmits communication data to the in-vehicle network;
   a reception unit that receives communication data from the in-vehicle network;
   a network configuration changing unit that changes a slot amount used by the in-vehicle gateway for the time-triggered network, or a slot ID used by the in-vehicle gateway for the time-triggered network, in accordance with a traffic to be relayed by the in-vehicle gateway;
   a process timing determination unit that synchronizes the timing of execution of a process allocated to a slot for the time-triggered network with the slot; and
   a relay processing unit that relays the communication data by the transmission unit; and
an automotive control apparatus connected to the in-vehicle gateway for controlling a vehicle,
wherein the in-vehicle gateway and the automotive control apparatus are connected via the in-vehicle network.

### REFERENCE SIGNS LIST

- 1:: Gateway
- 11:: Processing unit
- 12:: Memory
- 121:: Program area
- 1211:: Network configuration changing unit
- 1212:: Process timing determination unit
- 1213:: Data relay processing unit
- 1214:: Transmission processing unit
- 1215:: Reception processing unit
- 1216:: Apparatus initialization unit
- 122:: Data storage area
- 1221:: Network configuration information table
- 12211:: Classification field
- 12212:: Static slot number field
- 12213:: Dynamic slot number field
- 12214:: Transmission rate field
- 12215:: Communication period field
- 1222:: Routing table
- 12221:: CAN ID field
- 12222:: Destination bus field
- 12223:: Destination CAN ID field
- 12224:: Destination slot ID field
- 1223:: Transmission slot ID managing table
- 12231:: Transmission slot ID field
- 1224:: Reception slot ID managing table
- 12241:: Reception slot ID field
- 1225:: Activation timing table
- 12251:: Global time field
- 12252:: Executed process field
- 13:: Input/output circuit
- 141:: Bus A controller
- 142:: Bus B controller
- 151:: Bus A
- 152:: Bus B
- 16:: External memory
- 161:: Network configuration updating data
- 1611:: Static slot number field
- 1612:: Dynamic slot number field
- 1613:: Transmission rate field
- 1614:: Communication period field
- 162:: Routing data
- 1621:: CAN ID field
- 1622:: Destination bus field
- 1623:: Destination CAN ID field
- 1624:: Destination slot ID field
- 1625:: Reception slot ID
- 2:: Engine control ECU
- 3:: Meter ECU
- 4:: CAN network
- 5:: FlexRay network
- 100:: Automotive control system

## Claims

1. An in-vehicle gateway for relaying communication data in an in-vehicle network including a time-triggered network (5), the in-vehicle gateway (1) comprising:
a transmission unit (1214) that transmits communication data to the in-vehicle network;
a reception unit (1215) that receives communication data from the in-vehicle network;
a network configuration changing unit (1211) that changes a slot amount used by the in-vehicle gateway (1) for the time-triggered network (5), or a slot ID used by the in-vehicle gateway (1) for the time-triggered network (5), in accordance with a traffic to be relayed by the in-vehicle gateway (1);
a process timing determination unit (1212) that synchronizes the timing of execution of a process allocated to a slot for the time-triggered network (5) with the slot; and
a relay processing unit (1213) that relays the communication data by the transmission unit (1214), **characterized in that**
after the slot amount or the slot ID is changed by the network configuration changing unit (1211), the process timing determination unit (1212) readjusts the timing of execution of the process, so that the transmission unit (1214) can complete a necessary preprocessing for transmitting the communication data by a slot time of the time-triggered network (5) assigned to the transmission unit (1214) for transmission of the communication data.

2. The in-vehicle gateway according to claim 1, wherein the network configuration changing unit (1211) changes the slot amount used by the in-vehicle gateway (1) for the time-triggered network (5) by changing the slot amount for the time-triggered network (5) by increasing the frequency of communication via the time-triggered network (5) or by decreasing the time allocated to each slot for the time-triggered network (5).

3. The in-vehicle gateway according to claim 1 or 2, wherein:
the network configuration changing unit (1211) transmits change instruction data with an instruction for changing the slot amount for the time-triggered network (5) to another communication apparatus connected to the time-triggered network (5) before changing the slot amount for the time-triggered network (5); and
the network configuration changing unit (1211) then transmits initialization instruction data with an instruction for initializing a communication function to the other communication apparatus.

4. The in-vehicle gateway according to at least one of claims 1 to 3, wherein the network configuration changing unit (1211) describes in the change instruction data transmitted to the other communication apparatus:
data indicating the slot amount for the time-triggered network (5);
data indicating the transmission rate for the time-triggered network (5); and
data indicating the communication periods for the time-triggered network (5).

## Patentansprüche

1. Fahrzeuginternes Gateway zum Weiterleiten von Kommunikationsdaten in einem fahrzeuginternen Netz, das ein zeitgesteuertes Netz (5) enthält, wobei das fahrzeuginterne Gateway (1) Folgendes umfasst:
eine Sendeeinheit (1214), die Kommunikationsdaten zu dem fahrzeuginternen Netz sendet;
eine Empfangseinheit (1215), die Kommunikationsdaten von dem fahrzeuginternen Netz empfängt;
eine Netzkonfigurationsänderungseinheit (1211), die einen Slot-Anteil, der von dem fahrzeuginternen Gateway (1) für das zeitgesteuerte Netz (5) verwendet wird, oder eine Slot-ID, die von dem fahrzeuginternen Gateway (1) für das zeitgesteuerte Netz (5) verwendet wird, in Übereinstimmung mit Verkehr, der durch das fahrzeuginterne Gateway (1) weitergeleitet werden soll, ändert;
eine Prozesszeitvorgabe-Bestimmungseinheit (1212), die die Zeitvorgabe der Ausführung eines Prozesses, der einem Slot für das zeitgesteuerte Netz (5) zugeordnet ist, mit dem Slot synchronisiert; und
eine Weiterleitungsverarbeitungseinheit (1213), die die Kommunikationsdaten durch die Sendeeinheit (1214) weiterleitet,
**dadurch gekennzeichnet, dass**
dann, wenn der Slot-Anteil oder die Slot-ID durch die Netzkonfigurationsänderungseinheit (1211) geändert worden ist, die Prozesszeitvorgabe-Bestimmungseinheit (1212) die Zeitvorgabe der Ausführung des Prozesses, damit die Sendeeinheit (1214) eine erforderliche Vorverarbeitung zum Senden der Kommunikationsdaten abschließen kann, durch eine Slot-Zeit des zeitgesteuerten Netzes (5), die der Sendeeinheit (1214) zum Senden der Kommunikationsdaten zugewiesen ist, neu einstellt.

2. Fahrzeuginternes Gateway nach Anspruch 1, wobei die Netzkonfigurationsänderungseinheit (1211) den Slot-Anteil, der durch das fahrzeuginterne Gateway (1) für das zeitgesteuerte Netz (5) verwendet wird, durch Ändern des Slot-Anteils für das zeitgesteuerte Netz (5) durch Erhöhen der Frequenz der Kommunikation über das zeitgesteuerte Netz (5) oder durch Verringern der Zeit, die jedem Slot für das zeitgesteuerte Netz (5) zugewiesen ist, ändert.

3. Fahrzeuginternes Gateway nach Anspruch 1 oder 2, wobei:
die Netzkonfigurationsänderungseinheit (1211) Änderungsbefehlsdaten, die einen Befehl zum Ändern des Slot-Anteils für das zeitgesteuerte Netz (5) enthalten, zu einer weiteren Kommunikationsvorrichtung sendet, die mit dem zeitgesteuerten Netz (5) verbunden ist, bevor der Slot-Anteil für das zeitgesteuerte Netz (5) geändert wird; und
die Netzkonfigurationsänderungseinheit (1211) Initialisierungsbefehlsdaten, die einen Befehl zum Initialisieren einer Kommunikationsfunktion mit der anderen Kommunikationsvorrichtung enthalten, sendet.

4. Fahrzeuginternes Gateway nach wenigstens einem der Ansprüche 1 bis 3, wobei die Netzkonfigurationsänderungseinheit (1211) in den Änderungsbefehlsdaten, die zu der anderen Kommunikationsvorrichtung gesendet werden, Folgendes beschreibt:
Daten, die den Slot-Anteil für das zeitgesteuerte Netz (5) angeben;
Daten, die die Senderate für das zeitgesteuerte Netz (5) angeben; und
Daten, die die Kommunikationsperioden für das zeitgesteuerte Netz (5) angeben.

## Revendications

1. Passerelle embarquée dans un véhicule pour relayer des données de communication dans un réseau embarqué dans un véhicule comprenant un réseau déclenché par le temps (5), la passerelle embarquée dans un véhicule (1) comprenant :
une unité d'émission (1214) qui émet des données de communication au réseau embarqué dans un véhicule ;
une unité de réception (1215) qui reçoit des données de communication en provenance du réseau embarqué dans un véhicule ;
une unité de modification de configuration de réseau (1211) qui modifie une quantité de créneaux utilisée par la passerelle embarquée dans un véhicule (1) pour le réseau déclenché par le temps (5), ou une identification (ID) de créneau utilisée par la passerelle embarquée dans un véhicule (1) pour le réseau déclenché par le temps (5), selon un trafic à relayer par la passerelle embarquée dans un véhicule (1) ;
une unité de détermination de temporisation de processus (1212) qui synchronise la temporisation d'exécution d'un processus alloué à un créneau pour le réseau déclenché par le temps (5) avec le créneau ; et
une unité de traitement de relais (1213) qui relaye les données de communication par l'unité d'émission (1214), **caractérisée par le fait que** :
après que la quantité de créneaux ou l'ID de créneau est modifiée par l'unité de modification de configuration de réseau (1211), l'unité de détermination de temporisation de processus (1212) réajuste la temporisation d'exécution du processus, de telle sorte que l'unité d'émission (1214) peut accomplir un prétraitement nécessaire pour émettre les données de communication par un temps de créneau du réseau déclenché par le temps (5) affecté à l'unité d'émission (1214) pour l'émission des données de communication.

2. Passerelle embarquée dans un véhicule selon la revendication 1, dans laquelle l'unité de modification de configuration de réseau (1211) modifie la quantité de créneaux utilisée par la passerelle embarquée dans un véhicule (1) pour le réseau déclenché par le temps (5) par modification de la quantité de créneaux pour le réseau déclenché par le temps (5) par augmentation de la fréquence de communication par l'intermédiaire du réseau déclenché par le temps (5) ou par diminution du temps alloué à chaque créneau pour le réseau déclenché par le temps (5).

3. Passerelle embarquée dans un véhicule selon la revendication 1 ou 2, dans laquelle :
l'unité de modification de configuration de réseau (1211) émet des données d'instruction de modification avec une instruction pour modifier la quantité de créneaux pour le réseau déclenché par le temps (5) à un autre appareil de communication connecté au réseau déclenché par le temps (5) avant modification de la quantité de créneaux pour le réseau déclenché par le temps (5) ; et
l'unité de modification de configuration de réseau (1211) émet ensuite des données d'instruction d'initialisation avec une instruction pour initialiser une fonction de communication à l'autre appareil de communication.

4. Passerelle embarquée dans un véhicule selon au moins l'une des revendications 1 à 3, dans laquelle l'unité de modification de configuration de réseau (1211) décrit dans les données d'instruction de modification émises à l'autre appareil de communication :
des données indiquant la quantité de créneaux pour le réseau déclenché par le temps (5) ;
des données indiquant la vitesse d'émission-pour le réseau déclenché par le temps (5) ; et
des données indiquant les périodes de communication pour le réseau déclenché par le temps (5).
